# EUROPÄISCHE PATENTSCHRIFT

(11) **EP 3 327 303 B1**
(45) Veröffentlichungstag und Bekanntmachung des Hinweises auf die Patenterteilung: **26.08.2020**
(21) Anmeldenummer: 17001695.0
(22) Anmeldetag: 13.10.2017
(51) Int. Cl.: F16D 1/033, F16D 1/076

(54) **VERBINDUNGSANORDNUNG ZUM VERBINDEN EINER WELLE MIT EINEM BAUTEIL**
CONNECTION ASSEMBLY FOR CONNECTING A SHAFT TO A COMPONENT
DISPOSITIF DE RACCORDEMENT PERMETTANT DE RACCORDER UN ARBRE À UN COMPOSANT

(30) Priorität: 28.10.2016 DE 102016012947
(43) Veröffentlichungstag der Anmeldung: 30.05.2018
(73) Patentinhaber: Neumayer Tekfor Engineering GmbH, 77756 Hausach (DE)
(72) Erfinder: Fuchs, Christian, 77716 Fischerbach (DE); Etzold, Thomas, 77654 Offenburg (DE); Lehmann, Martin, 78132 Hornberg (DE)

(56) Entgegenhaltungen:
- DE-A1-102007 005 849
- DE-C- 440 816
- DE-T5-112014 001 114
- US-A1- 2001 016 520
- US-A1- 2008 104 844

## Beschreibung

Die vorliegende Erfindung betrifft eine Verbindungsanordnung zum Verbinden einer Welle mit einem Bauteil gemäß dem Oberbegriff des ersten Anspruchs. Eine gattungsgemäße Anordnung offenbart die US 2008/0104844 A1.

Generell bezieht sich die Erfindung auf eine Wellenanbindung.

Im Stand der Technik werden Verbindungen von Wellen in Kraftfahrzeugen häufig als Flanschverbindungen realisiert. Vorteile davon sind die spielfreie Verbindung durch Kraftschluss, die einfache Realisierung einer Zentrierung sowie die Befestigung durch Schrauben. Nachteile sind die nicht unerheblichen Masse der Flansche, der zusätzlich erforderliche Bauraum im Durchmesser sowie der erhöhte Montageaufwand durch die Notwendigkeit mehrerer Schrauben.

Alternativ werden direkte Wellenverbindungen realisiert, wobei ohne Flanschverbindungen das Drehmoment über eine Zahnwellenverbindung übertragen wird. Die Herausforderungen liegen dabei in der axialen Sicherung der Verbindung und in der Kompromissfindung zwischen einer guten Montierbarkeit (Spielpassung) und der Spielfreiheit bzw. Zentrierung (Übermaßpassung). Vorteilig sind die geringe Masse, die einfache Montierbarkeit und der geringe Bauraumbedarf.

Ausgestaltungen zum Verbinden von Gelenken mit Wellen offenbaren beispielsweise die DE 102 08 962 A1 oder die DE 10 2006 012 031 A1. Dabei finden beispielsweise besonders ausgestaltete Stirnverzahnungen Verwendung (siehe die DE 10 2006 012 031 A1 oder die parallele US 2008/0104844 A). So lässt sich beispielsweise der DE 10 2007 005 849 A1 entnehmen, dass eine Hirth-Verzahnung Verwendung findet. In der DE 11 2014 001 114 T5 wird offenbart, dass ein Adapterelement mit einer Längsverzahnung zur Verbindung einer Kardanwelle mit einem Bauteil dient. Eine Verbindung zwischen einem Gelenk und einem Radlager über eine Überwurfmutter in Verbindung mit zueinander korrespondierenden Kontaktflächen offenbart die US 2001/0016520 A1. Schließlich offenbart die DE 440 816 C, dass Wellen über korrespondierende Endflächen miteinander verbunden werden.

Die Aufgabe der Erfindung besteht darin, eine Verbindungsanordnung vorzuschlagen, die die Nachteile des Standes der Technik vermeidet.

Die Erfindung löst die Aufgabe mit einer Verbindungsanordnung mit den Merkmalen des ersten Anspruchs zum Verbinden einer Welle mit einem Bauteil. Das Bauteil ist beispielsweise ein Gelenkteil. Die Welle ist zudem beispielsweise eine Getriebewelle als Teil eines Antriebsstrangs eines Fahrzeugs.

Die Verbindungsanordnung zum Verbinden einer Welle mit einem Bauteil weist mindestens eine Adaptervorrichtung auf. Die Adaptervorrichtung und die Welle sind derartig aus-

In einer Ausgestaltung verfügt die Adaptervorrichtung insbesondere über eine durchgehende Aussparung, die insbesondere der Durchführung der Welle durch die Adaptervorrichtung dient.

Gemäß einer Ausgestaltung ist vorgesehen, dass die Adaptervorrichtung einen becherartigen Innenraum zur Aufnahme der Mutter aufweist. Befindet sich die Mutter in dem becherartigen Innenraum, so kann sie beim Anziehen gegenüber einem stirnseitigen Außengewinde der Welle die Adaptervorrichtung mit der Welle verbinden.

Eine Ausgestaltung beinhaltet, dass die Adaptervorrichtung eine Innenverzahnung aufweist, die korrespondierend zu einer Außenverzahnung der Welle ausgestaltet ist. Über diese Innenverzahnung ist die Adaptervorrichtung gegenüber Drehungen auf der Welle fixiert. Zudem lässt sich so das Drehmoment zwischen Welle und Adaptervorrichtung übertragen.

Erfindungsgemäß ist vorgesehen, dass eine stirnseitige Plan-Kerbverzahnung des Bauteils die Kontaktfläche des Bauteils und eine stirnseitige Plan-Kerbverzahnung der Adaptervorrichtung die Kontaktfläche der Adaptervorrichtung bildet. Dabei sind die stirnseitige Plan-Kerbverzahnung des Bauteils und die stirnseitige Plan-Kerbverzahnung der Adaptervorrichtung zueinander passend ausgestaltet. Es werden somit zwei Plan-Kerbverzahnungen miteinander in Kontakt gebracht, die sich jeweils auf den Stirnseiten bzw. Stirnflächen der Adaptervorrichtung bzw. des Bauteils befinden. Eine alternative Bezeichnung für Plan-Kerbverzahnung ist Hirth-Verzahnung.

In den weiteren Ausgestaltungen wird teilweise die axiale Fixierung zwischen der Adaptervorrichtung und dem Bauteil thematisiert. Hiermit soll sichergestellt werden, dass die beteiligten Kontaktflächen in Kontakt miteinander bleiben. Die axiale Fixierung bezieht sich dabei jeweils auf die Längsachse der Verbindungsanordnung, die beispielweise die Längsachse der Welle und/oder des Bauteils ist.

Gemäß einer Ausgestaltung ist vorgesehen, dass eine Stirnseite der Adaptervorrichtung und eine Stirnseite des Bauteils flanschartig ausgestaltet sind. In dieser Ausgestaltung liegen sich somit zwei kreisringförmige Flansche gegenüber, die sich radial nach außen hin erstrecken.

Eine Ausgestaltung beinhaltet, dass die flanschartige Stirnseite der Adaptervorrichtung mindestens eine Aussparung und die flanschartige Stirnseite des Bauteils mindestens eine Aussparung aufweist. Die mindestens eine Aussparung der Adaptervorrichtung und die mindestens eine Aussparung des Bauteils sind für das Einbringen einer Schraube ausgestaltet. In dieser Ausgestaltung werden somit die Flansche dazu verwendet, dass über die radial herausragenden Flansche Schrauben durch Aussparungen in den Flanschen eingebracht werden können.

Gemäß einer Ausgestaltung ist vorgesehen, dass mindestens eine Schraube vorhanden ist. Die mindestens eine Schraube fixiert dabei die Adaptervorrichtung und das Bauteil axial entlang einer Längsachse miteinander. Die Schraube wird dabei in einer Ausgestaltung mit einer Mutter kombiniert.

Eine Ausgestaltung beinhaltet, dass das Bauteil oder die Adaptervorrichtung ein Außengewinde für eine Überwurfmutter aufweist. In dieser Ausgestaltung erlaubt eine Überwurfmutter, die mit einem Außengewinde verschraubt wird, die axiale Fixierung.

Gemäß einer Ausgestaltung ist vorgesehen, dass die Adaptervorrichtung oder das Bauteil eine sich radial erstreckende Anschlagfläche für eine Überwurfmutter aufweist. In einer Ausgestaltung weist das Element (Adaptervorrichtung oder Bauteil), das nicht ein zuvor genanntes Außengewinde für die Überwurfmutter trägt, die sich radial erstreckende Anschlagfläche auf.

Eine Ausgestaltung beinhaltet, dass eine Überwurfmutter vorhanden ist. Die Überwurfmutter fixiert die Adaptervorrichtung und das Bauteil axial entlang einer Längsachse miteinander.

Gemäß einer Ausgestaltung ist vorgesehen, dass das Bauteil ein Außenteil oder ein Innenteil eines Gelenks ist. Das Gelenk ist beispielsweise ein Verschiebegelenk oder ein Festgelenk.

Erfindungsgemäß besteht das Bauteil aus mindestens zwei Komponenten. Durch eine Mehrteiligkeit des Bauteils lassen sich unterschiedliche Materialeigenschaften und/oder Herstellungsverfahren miteinander kombinieren. Die mindestens zwei Komponenten unterscheiden sich in einer Ausgestaltung dadurch, dass eine Komponente die Kontaktfläche des Bauteils trägt und dass die andere Komponente besonders durch die Eigenschaften und Funktionen des Bauteils an sich geprägt ist. Die Komponente mit der Kontaktfläche bildet dabei vorzugsweise einen Teil der Stirnseite des Bauteils, die der Welle zugewandt ist.

Erfindungsgemäß weisen die mindestens zwei Komponenten unterschiedliche Materialeigenschaften auf.

Gemäß einer Ausgestaltung ist vorgesehen, dass eine der mindestens zwei Komponenten ein Schmiedebauteil und das andere der mindestens zwei Komponenten ein Blechbauteil ist.

Erfindungsgemäß trägt nur eine der zwei Komponenten des Bauteils die die Kontaktfläche des Bauteils bildende Plan-Kerbverzahnung.

Die mehreren Komponenten des Bauteils sind in einer Ausgestaltung miteinander verschweißt.

Gemäß einer Ausgestaltung ist vorgesehen, dass die Welle eine Getriebewelle mit einer Außenverzahnung und einem stirnseitigen Außengewinde ist.

Im Einzelnen gibt es eine Vielzahl von Möglichkeiten, die erfindungsgemäße Vorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: eine teilweise geschnittene räumliche Darstellung einer nicht erfindungsgemäßen ersten Variante einer Verbindungsanordnung,
- Fig. 2: eine weitere Darstellung der Verbindungsanordnung der Fig. 1,
- Fig. 3: eine geschnittene räumliche Darstellung einer nicht erfindungsgemäßen zweiten Variante einer Verbindungsanordnung,
- Fig. 4: einen Schnitt durch eine erfindungsgemäße dritte Variante einer Verbindungsanordnung und
- Fig. 5: einen Schnitt durch eine nicht erfindungsgemäße vierte Variante einer Verbindungsanordnung.

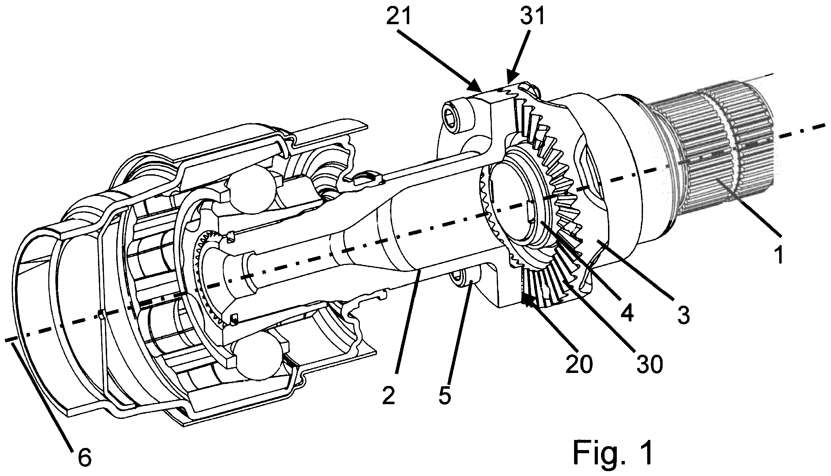

Die Fig. 1 zeigt eine erste Ausgestaltung der Verbindungsanordnung zwischen einer Welle 1 und einem Bauteil 2, das hier ein Innenteil eines Verschiebegelenks ist. Bei der Welle 1 handelt es sich um eine gewöhnliche (z. B. Getriebe-)Welle, die eine seitliche Längsverzahnung und ein Außengewinde an ihrem Stirnende aufweist. Die Welle 1 wird durch die Adaptervorrichtung 3 ergänzt, die durch die Mutter 4 mit der Welle 1 kraft- und drehmomentschlüssig verbunden ist. Die Adaptervorrichtung 3 ermöglicht die Verbindung der Welle 1 mit dem Bauteil 2, ohne dass aufwändige Ausgestaltungen oder Modifikationen der Welle 1 erforderlich wären.

Für die eigentliche Verbindung zwischen der Adaptervorrichtung 3 als Verlängerung oder Ergänzung der Welle 1 und dem Bauteil 2 sind jeweilige Kontaktflächen 30, 20 vorgesehen: In der hier gezeigten Ausgestaltung verfügen die beiden Kontaktflächen 20, 30 jeweils über korrespondierende und somit zueinander passende Plan-Kerbverzahnungen (alternative Bezeichnung ist Hirth-Verzahnung). Die Plan-Kerbverzahnungen sind hier jeweils auf den Stirnflächen 21, 31 des Bauteils 2 bzw. der Adaptervorrichtung 3 vorhanden. Generell handelt es sich bei Plan-Kerbverzahnungen um rein axial wirksame, planseitige Verzahnungen. Mit Plan-Kerbverzahnungen sind auf kleinem Raum und mit geringer Überdeckung Verbindungen realisierbar, die hohe Drehmomente übertragen können und auch gute Zentriereigenschaften für die Montage bieten. Eine Plan-Kerbverzahnung bietet eine hohe Leistungsdichte (also eine hohe Übertragungsfähigkeit auf kleinem Raum), wirkt zentrierend, hat im montierten Zustand kein Spiel und lässt sich insbesondere unter Verwendung von Muttern (siehe die folgenden Beispiele) einfach montieren. Eine solche Plan-Kerbverzahnung lässt sich überdies mittels Umformverfahren sehr wirtschaftlich herstellen. Insofern die Welle oder das Bauteil, auf dem die Plan-Kerbverzahnung aufzubringen ist, bereits einen Umformprozess erfährt, kann die Verzahnung nahezu kostenneutral eingebracht werden.

Die Stirnflächen 21, 31 sind hier zusätzlich jeweils flanschartig ausgestaltet, weshalb sich die Stirnflächen 21, 31 jeweils radial nach außen erstrecken. Für die axiale Fixierung dienen zwei Schrauben 5, die in entsprechende und durchgehende Aussparungen der flanschartigen Stirnseiten 21, 31 eingebracht und beispielsweise durch - hier nur im oberen Fall angedeutete - Muttern gehalten werden. Durch die Schrauben 5 ergibt sich somit eine axiale Fixierung zwischen dem Bauteil 2 und der Adaptervorrichtung 3 bzw. damit der Welle 1 entlang der Längsachse 6 der Verbindungsanordnung, die hier auch die Längsachse der Welle 1 und die Längsachse des Gelenks bzw. des Bauteils 2 ist.

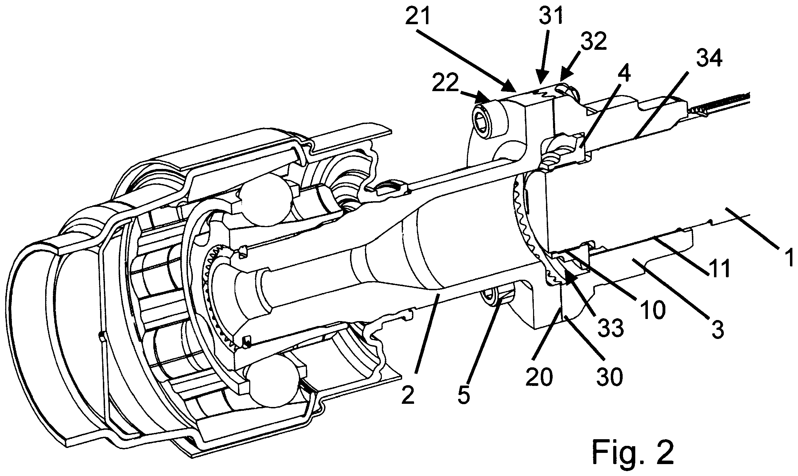

Die Fig. 2 zeigt einen vollständigen Schnitt durch die Anordnung der Fig. 1, wobei die Plan-Kerbverzahnungen durch die Zähne der Kontaktflächen 20, 30 der Stirnflächen 21, 31 des Bauteils 2 und der Adaptervorrichtung 3 zu erkennen sind. In den beiden Stirnflächen 21, 31 befinden sich auch die hier durchgehenden Aussparungen 22, 32 für die Schrauben 5.

Deutlich wird in der Fig. 2 insbesondere die Verbindung zwischen der Welle 1 und der Adaptervorrichtung 3. Die Adaptervorrichtung 3 verfügt über einen becherartigen Innenraum 33, der hier insbesondere dem Bauteil 2 zugewandt ist. Dieser becherartige Innenraum 33 nimmt die Mutter 4 auf, die mit dem stirnseitigen Außengewinde 10 der Welle 1 verschraubt ist. Somit ist der - mit einer durchgehenden Aussparung versehene - Boden des becherartigen Innenraums 33 der Adaptervorrichtung 3 axial gegenüber der Welle 1 fixiert und bewirkt damit gleichsam die Verlängerung oder Ergänzung der Welle 1 durch die Adaptervorrichtung 3. Für die rotatorische Fixierung zwischen Welle 1 und Adaptervorrichtung 3 sorgt die Kombination zwischen der Innenverzahnung 34 der Adaptervorrichtung 3 und der Außenverzahnung 11 der Welle 1. Hiermit wird auch deutlich, dass die Verbindungsanordnung eine im Stand der Technik bekannte Welle 1 mit Längsverzahnung 11 auf der Außenseite und einem Außengewinde 10 am Stirnende verwendet, indem die Welle 1 durch die Adaptervorrichtung 3 an die Art der Verbindung mit einem Bauteil 2 adaptiert wird.

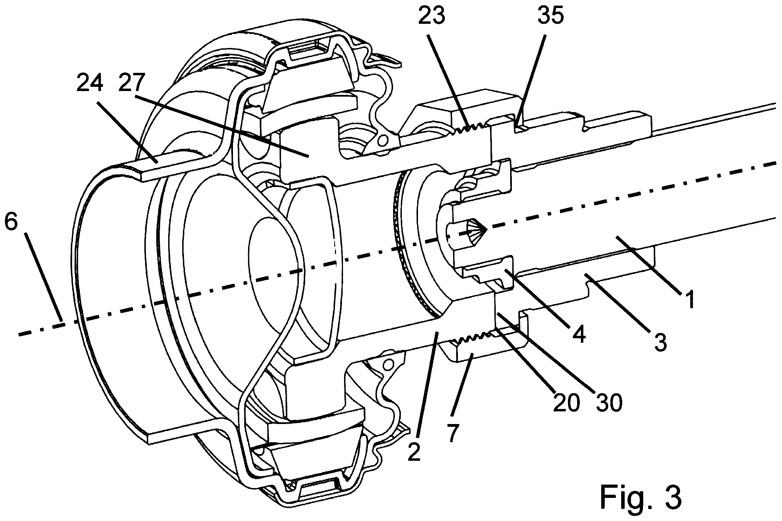

In der Fig. 3 handelt es sich bei dem Bauteil 2 um das Innenteil 27 eines Gelenks. Das Außenteil 24 des Gelenks auf der gegenüberliegenden Seite umfasst entsprechend das Innenteil 27 und die der Übertragung des Drehmoments dienenden Kugeln. Die Welle 1 ist hier ebenfalls über die Mutter 4 mit der Adaptervorrichtung 3 verbunden.

Die Adaptervorrichtung 3 verfügt in Richtung der Stirnseite und insbesondere an der von dem Bauteil 2 abgewandten Seite über eine Anschlagfläche 35, die für den Kontakt mit der Überwurfmutter 7 eine ausreichend große radiale Erstreckung aufweist. Die Anschlagfläche 35 wird dabei über eine treppenartige Änderung des radialen Außenumfangs gebildet. Das Bauteil 2 in Form des Gelenkinnenteils 27 weist auf ihrer Außenseite ein Außengewinde 23 auf, das korrespondierend zu dem Innengewinde der Überwurfmutter 7 ausgestaltet ist. Die Überwurfmutter 7 erzeugt daher in der gezeigten Ausgestaltung die axiale Verbindung zwischen dem Bauteil 2 und der Adaptervorrichtung 3 und dadurch zugleich mit der Welle 1 entlang der Längsachse 6.

Die Kontaktfläche 20 des Bauteils 2 und die Kontaktfläche 30 der Adaptervorrichtung 3 werden auch hier jeweils durch eine stirnseitige Plan-Kerbverzahnung gebildet.

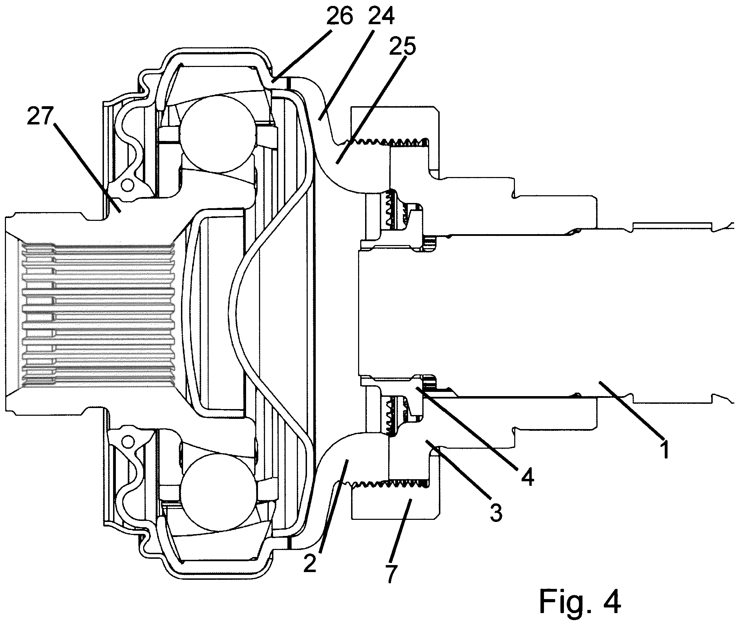

Die Variante der Fig. 4 unterscheidet sich von der Variante der Fig. 3 dahingehend, dass es sich bei dem Bauteil 2 um das Außenteil 24 eines Gelenks handelt, das ein Innenteil 27 umfasst und das über die Überwurfmutter 7 mit der Adaptervorrichtung 3 verbunden ist.

Das Außenteil 24 besteht hier insbesondere aus zwei Komponenten 25, 26, die unterschiedliche Materialeigenschaften und hier auch unterschiedliche Wandstärken aufweisen. Zum einen ist dies eine Komponente 25, die der Adaptervorrichtung 3 zugewandt ist, die die Plan-Kerbverzahnung trägt und die aus einem Material besteht, das eine Schmiedeumformung erlaubt. Die andere - somit beispielsweise zweite - Komponente 26 ist direkt dem Gelenk zugehörig und ist für diese Aufgabe vorzugsweise als Blechteil ausgeführt. Die beiden Komponenten 25, 26 sind hier über einen Schweißprozess miteinander verbunden. Über den Schweißprozess lassen sich beispielsweise Lagefehler kompensieren. Durch die passende Wahl der verwendeten Materialien und der Ausnutzung der zugehörigen Eigenschaften lassen sich somit weitere Vorteile generieren. Die als Blechteil ausgestaltete Komponente 26 weist eine hohe Zähigkeit auf einem großen Durchmesser auf, wobei die andere Komponente 25 als Schmiedeteil über eine hohe Festigkeit verfügt.

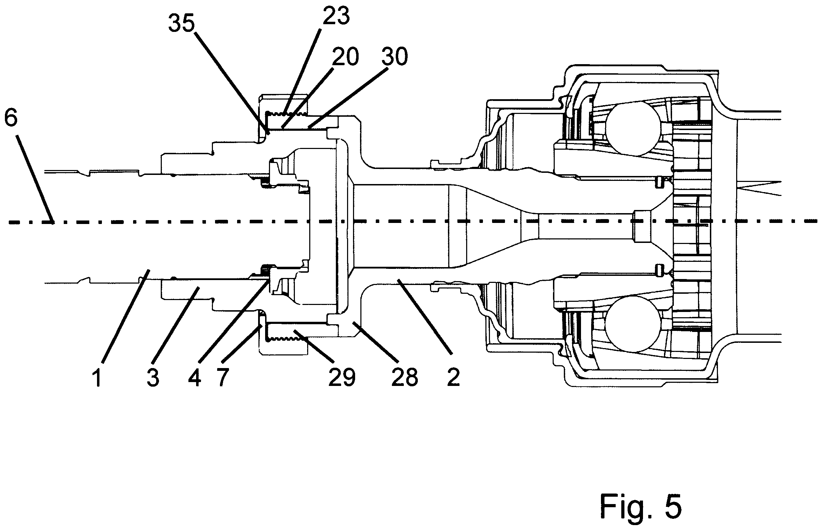

Die Ausgestaltung der Fig. 5 unterscheidet sich von den Varianten der Fig. 1 bis 4 dahingehend, dass die Kontaktflächen 20, 30 nicht durch Plan-Kerbverzahnungen, sondern durch Längsverzahnungen gebildet werden. Die Längsverzahnungen befinden sich dabei auf der Außenseite der Adaptervorrichtung 3 sowie auf der Innenseite der Stirnseite des Bauteils 2. Das Bauteil 2 ist das Innenteil eines Gelenks.

Eine Überwurfmutter 7 dient der axialen Fixierung entlang der Längsachse 6 zwischen dem Bauteil 2 und der Adaptervorrichtung 3, die mit der Welle 1 durch die Mutter 4 verbunden ist. Die Überwurfmutter 7 wird auf das Außengewinde 23 des Bauteils 2 aufgeschraubt, bis sie an der Anschlagfläche 35 der Adaptervorrichtung 3 anstößt.

Das Bauteil 2 verfügt in der dargestellten Ausgestaltung stirnseitig über zwei Komponenten 28, 29, die hier beispielhaft über eine Schweißverbindung miteinander verbunden sind. Die der Welle 1 zugewandte vordere Komponente 29 trägt dabei die Längsverzahnung, die die Kontaktfläche 20 zu der Adaptervorrichtung 3 bildet. Die von der Adaptervorrichtung 3 abgewandte zweite Komponente 28, die damit auch näher dem Gelenk zugewandt ist, verfügt in der dargestellten Ausgestaltung über eine Art von Nase, die eine Zentrierung bei der Montage erlaubt.

## Patentansprüche

1. Verbindungsanordnung zum Verbinden einer Welle (1) mit einem Bauteil (2),
wobei mindestens eine Adaptervorrichtung (3) vorhanden ist,
wobei die Adaptervorrichtung (3) und die Welle (1) derartig ausgestaltet und aufeinander abgestimmt sind, dass die Adaptervorrichtung (3) und die Welle (1) miteinander zumindest kraftschlüssig und/oder formschlüssig verbindbar sind,
wobei das Bauteil (2) eine Kontaktfläche (20) aufweist,
wobei die Adaptervorrichtung (3) eine Kontaktfläche (30) aufweist,
wobei die Kontaktfläche (20) des Bauteils (2) und die Kontaktfläche (30) der Adaptervorrichtung (3) passend zueinander ausgestaltet sind,
**dadurch gekennzeichnet,**
**dass** eine stirnseitige Hirth-Verzahnung des Bauteils (2) die Kontaktfläche (20) des Bauteils (2) bildet,
**dass** eine stirnseitige Hirth-Verzahnung der Adaptervorrichtung (3) die Kontaktfläche (30) der Adaptervorrichtung (3) bildet,
**dass** die stirnseitige Hirth-Verzahnung des Bauteils (2) und die stirnseitige Hirth-Verzahnung der Adaptervorrichtung (3) zueinander passend ausgestaltet sind,
**dass** das Bauteil (2) aus mindestens zwei Komponenten (25, 26) besteht,
**dass** nur eine der zwei Komponenten (25, 26) die Kontaktfläche (20) des Bauteils (2) trägt, und
**dass** die mindestens zwei Komponenten (25, 26) unterschiedliche Materialeigenschaften aufweisen.

2. Verbindungsanordnung nach Anspruch 1,
wobei eine Stirnseite (31) der Adaptervorrichtung (3) und eine Stirnseite (21) des Bauteils (2) flanschartig ausgestaltet sind,
wobei die flanschartige Stirnseite (31) der Adaptervorrichtung (3) mindestens eine Aussparung (32) aufweist,
wobei die flanschartige Stirnseite (21) des Bauteils (2) mindestens eine Aussparung (22) aufweist,
wobei die mindestens eine Aussparung (32) der Adaptervorrichtung (3) und die mindestens eine Aussparung (22) des Bauteils (2) für das Einbringen einer Schraube (5) ausgestaltet sind,
wobei mindestens eine Schraube (5) vorhanden ist, und
wobei die mindestens eine Schraube (5) die Adaptervorrichtung (3) und das Bauteil (2) axial entlang einer Längsachse (6) miteinander fixiert.

3. Verbindungsanordnung nach Anspruch 1,
wobei das Bauteil (2) oder die Adaptervorrichtung (3) ein Außengewinde (23) für eine Überwurfmutter (7) aufweist,
wobei eine Überwurfmutter (4) vorhanden ist, und
wobei die Überwurfmutter (4) die Adaptervorrichtung (3) und das Bauteil (2) axial entlang einer Längsachse (6) miteinander fixiert.

4. Verbindungsanordnung nach einem der Ansprüche 1 bis 3,
wobei eine der mindestens zwei Komponenten (25, 26) ein Schmiedebauteil (25) und das andere der mindestens zwei Komponenten (25, 26) ein Blechbauteil ist.

## Claims

1. Connection arrangement for connecting a shaft (1) to a component (2),
whereby at least one adapter device (3) is provided,
whereby the adapter device (3) and the shaft (1) are designed and matched to each
other in such a way that the adapter device (3) and the shaft (1) can be connected to each other via non-positive and/or positive locking at least,
whereby the component (2) has a contact surface (20),
whereby the adapter device (3) has a contact surface (30),
whereby the contact surface (20) of the component (2) and the contact surface (30) of the adapter device (3) are designed to match each other,
**characterized by the fact that**
in that a Hirth toothing on the end face of the component (2) forms the contact surface (20) of the component (2),
in that a Hirth toothing on the end face of the adapter device (3) forms the contact surface (30) of the adapter device (3),
in that the Hirth toothing on the end face of the component (2) and the Hirth toothing on the end face of the adapter device (3) are designed to match one another, in that the component (2) comprises at least two components (25, 26), in that only one of the two components (25, 26) bears the contact surface (20) of the component (2), and
that the at least two components (25, 26) have different material properties.

2. Connection arrangement according to Claim 1,
whereby one end face (31) of the adapter device (3) and one end face (21) of the component (2) are of flange-like design,
whereby the flange-like end face (31) of the adapter device (3) has at least one recess (32),
whereby the flange-like end face (21) of the component (2) has at least one recess (22),
whereby the at least one recess (32) of the adapter device (3) and the at least one recess (22) of the component (2) are designed for the insertion of a screw (5),
whereby at least one screw (5) is present, and
whereby the at least one screw (5) fixes the adapter device (3) and the component (2) to each other axially along a longitudinal axis (6).

3. Connection arrangement according to Claim 1,
whereby the component (2) or the adapter device (3) has an external thread (23) for a union nut (7),
whereby a union nut (4) is present, and
whereby the union nut (4) fixes the adapter device (3) and the component (2) to each other axially along a longitudinal axis (6).

4. Connection arrangement according to one of Claims 1 to 3,
wherein one of the at least two components (25, 26) is a forged component (25) and the other of the at least two components (25, 26) is a sheet metal component.

## Revendications

1. Dispositif de connexion pour l'assemblage d'un arbre (1) et d'une pièce (2), dans lequel au moins un dispositif d'adaptation (3) est présent,
dans lequel le dispositif d'adaptation (3) et l'arbre sont agencés et mutuellement adaptés, de manière à ce que le dispositif d'adaptation (3) et l'arbre (1) puissent au moins être assemblés par force et/ou par forme,
dans lequel la pièce (2) présente une surface de contact (20),
dans lequel le dispositif d'adaptation (3) présente une surface de contact (30), dans lequel la surface de contact (20) de la pièce (2) et la surface de contact (30) du dispositif
d'adaptation (3) sont adaptées mutuellement,
**caractérisé en ce que,**
une denture Hirth à l'avant de la pièce (2) forme la surface de contact (20) de la pièce (2),
une denture Hirth à l'avant du dispositif d'adaptation (3) forme la surface de contact (30) du dispositif d'adaptation (3),
la denture Hirth à l'avant de la pièce (2) et la denture Hirth à l'avant du dispositif d'adaptation (3) sont adaptées mutuellement, de telle manière que la pièce comporte au moins deux composants (25, 26),
seulement un des deux composants (25, 26) porte la surface de contact (20) de la pièce
(2), et
**en ce qu'**au moins deux composants (25, 26) présentent des propriétés matérielles différentes.

2. Dispositif de connexion selon revendication 1,
dans lequel une face avant (31) du dispositif d'adaptation (3) et une face avant (21) de la pièce (2) sont arrangées à la manière de brides,
dans lequel la face avant faisant office de bride (31) du dispositif d'adaptation (3) présente au moins un évidement (32),
dans lequel la face avant faisant office de bride (21) de la pièce (2) présente au moins
un évidement (22),
dans lequel au moins un évidement (32) du dispositif d'adaptation (3) et au moins un évidement (22) de la pièce (2) sont agencés pour l'insertion d'une vis (5),
dans lequel au moins une vis (5) est présente, et
dans lequel au moins une vis (5) fixe ensemble le dispositif d'adaptation (3) et la pièce (2) en position axiale le long d'un axe longitudinal (6).

3. Dispositif de connexion selon revendication 1,
dans lequel la pièce (2) ou le dispositif d'adaptation (3) présente un filetage extérieur (23) pour un écrou-raccord (7),
dans lequel un écrou-raccord (4) est présent, et
dans lequel l'écrou-raccord (4) fixe ensemble le dispositif d'adaptation (3) et la pièce (2) en position axiale le long d'un axe longitudinal (6).

4. Dispositif de connexion selon l'une des revendications 1 à 3,
dans lequel l'un des deux composants (25, 26) au minimum est une pièce forgée (25) et l'autre des deux composants (25, 26) au minimum est une pièce en tôle.
